# EUROPÄISCHE PATENTANMELDUNG

(11) **EP 1 731 561 A1**
(43) Veröffentlichungstag der Anmeldung: **13.12.2006**
(21) Anmeldenummer: 06114300.4
(22) Anmeldetag: 22.05.2006
(51) Int. Cl.: C08K 7/00, C08K 7/16, C08K 5/56, C08L 83/00

(54) **Vernetzbare Zusammensetzungen auf der Basis von Organosiliciumverbindungen**

(30) Priorität: 06.06.2005 DE 102005025915
(71) Anmelder: Wacker Chemie AG, 81737 München (DE)
(72) Erfinder: Lork, Anette, 45289, Essen (DE)
(74) Vertreter: Gössmann, Christoph Tassilo

(57) **Zusammenfassung**

Zusammensetzung enthaltend:
- (A, B) durch Additionsreaktion vernetzende Organosiliciumverbindungen
- (D) mindestens einen ovalen bis kugelförmigen Feststoff und mindestens einen lamellaren Feststoff
- und weiterhin mindestens eine Komponente (E) aus der folgenden Gruppe:

- (1) Kohlenwasserstoffverbindung mit mindestens 8 Kohlenstoffatomen, wobei das Kohlenwasserstoffgerüst ggf. durch Heteroatome wie N, 0, P oder S unterbrochen sein kann und die freien Valenzen der Heteroatome durch Wasserstoff oder einwertige Kohlenwasserstoffreste abgesättigt sind
- (2)Silan der allgemeinen Formel

(RO)₄₋ₙSiXₙ

wobei R einen einwertigen Kohlenwasserstoffrest bedeutet mit bis zu 16 Kohlenstoffatomen und X unabhängig von R die Bedeutung von R hat oder einen funktionellen Kohlenwasserstoffrest bedeutet, bei dem zwischen der organischen funktionellen Gruppe und dem Si-Atom 1 bis 6 Kohlenstoffatome vorhanden sind und die organische funktionelle Gruppe gegebenenfalls eine Epoxidgruppe oder eine Methacryloxygruppe sein kann
- (3) eine zirkonorganische oder titanorganische Verbindung der allgemeinen Formel (RO)₄₋ₙMXₙ
wobei R und X die gleiche Bedeutung wie oben haben und M Ti oder Zr bedeutet
gegebenenfalls:
- (4) ein organisches Lösemittel
wobei der Reibungskoeffizient des Vulkanisates gegenüber einer Zubereitung, die keine Partikel (D) enthält, reduziert ist.

## Beschreibung

Die Erfindung betrifft vernetzbare Zusammensetzungen auf der Basis von Organosiliciumverbindungen und daraus hergestellte textile und nichttextile Flächengebilde und Formkörper.

Vernetzbare Massen auf der Basis von Organosiliciumverbindungen mit unterschiedlichen Arten von Füllstoffen und Zusätzen sind vielfach bekannt. Beispielsweise werden in EP 1 152 080 A2 in dünnen Klebeschichten fixierte, sphärische Partikel auf textilen Geweben speziell zur Reduzierung der Hautreibung beschrieben und in EP 0 953 675 A2 und WO 01/128 95 A1 überwiegend lamellare Füllstoffe/Partikel in textilen Beschichtungen zur Erzielung niedriger Reibungskoeffizienten. Weitere, angenähert lamellare, flakeartige Füllstoffe zur Haftungsreibungs-Reduzierung sind in DE 102 113 14 beschrieben.

Es hat sich mittlerweile herausgestellt, dass gerade die vielfach empfohlenen, lamellaren Extender als Effektfüllstoffe beispielsweise die Adhäsion von Kautschuken signifikant verschlechtern.

WO 01/12895 A1 beschreibt die merkliche Verschlechterung der physikalischen Eigenschaften elastomerer Beschichtungen durch lamellare Füllstoffe, wodurch die in EP 0 953 675 A2 beschriebene Verwendung derartig füllstoff-modifizierter Beschichtungen nun lediglich auf die Applikation als Topcoat reduziert werden soll.
Der in DE 102 113 14 empfohlene Einsatz von lamellar bis flakeartigen Effektfüllstoffen zur Minimierung des Reibungskoeffizienten von vernetzbaren Massen und Beschichtungen brachte unerwünschte Oberflächeneffekte sowie eine nicht zufriedenstellende Verarbeitbarkeit.

In EP 0 712 956 ist eine Beschichtung mit spärischen, organisch/anorganischen Komponenten beschrieben, die in Abhängigkeit von der Partikelgrösse ebenfalls zu einer Verschlechterung der Beschichtungseigenschaften führen. Des weiteren ist Lösemittel ein notwendiger Bestandteil zur Homogenisierung der sphärischen Komponenten.
Aufgabe der Erfindung ist es den Stand der Technik zu verbessern, insbesondere ist es vielfach wünschenswert, wenn vernetzbare Massen, textile Gewebe oder generell auch andere siliconkautschukbeschichtete Substrate spezielle Oberflächeneigenschaften aufweisen. Anders als bei den sich meist klebrig anfassenden Oberflächen üblicher Kautschuke, sind häufig Oberflächen mit weichem, trockenen Griff, und damit einhergehendem niedrigen Reibungskoeffizienten gefragt. Im besonderen Maße ist die Verringerung der Reibung bei bestimmten Kautschukmassen (z.B. Wischerblätter, soft-touch Anwendungen, blockfreie Dichtungen) oder von Kautschukbeschichtungen auf Airbaggeweben eine wichtige Anforderung. Insbesondere bei einer möglichen, schnellen Öffnung von Airbags muss die Reibung Stoff gegen Stoff so gering wie möglich gehalten werden.

Die vielfach gewünschten, guten Siliconkautschukeigenschaften von vernetzbaren Massen oder Beschichtungen, wie z.B. die sehr gute Mechanik, hohe Elastizität, gute Wärmeresistenz lassen sich entweder durch spezielle Modifikation der Kautschukmassen oder Beschichtungen selber, oder durch dünne Topcoats auf Siliconkautschuk-Basecoats zur Oberflächenmodifizierung entscheidend verbessern. Unter der Prämisse einer guten Haftung des Topcoats liesse sich eine Verringerung des Reibungskoeffizienten der im mechanischen Verhalten guten Kautschuk-Basecoats und ihrer Entflammbarkeit erzielen, bei möglicher Erhöhung der Shore-Härte und signifikanter Verbesserung der Griffeigenschaften und des Reibungskoeffizienten des Vulkanisates.

Gegenstand der Erfindung ist eine Zusammensetzung enthaltend:
- (A, B) durch Additionsreaktion vernetzende Organosiliciumverbindungen
- (D) mindestens einen ovalen bis kugelförmigen Feststoff und mindestens einen lamellaren Feststoff
- und weiterhin mindestens eine Komponente (E) aus der folgenden Gruppe:
   (1) Kohlenwasserstoffverbindung mit mindestens 8 Kohlenstoffatomen, wobei das Kohlenwasserstoffgerüst ggf. durch Heteroatome wie N, O, P oder S unterbrochen sein kann und die freien Valenzen der Heteroatome durch Wasserstoff oder einwertige Kohlenwasserstoffreste abgesättigt sind
   (2) Silan der allgemeinen Formel

      (RO)₄₋ₙSiXₙ

      wobei R einen einwertigen Kohlenwasserstoffrest bedeutet mit bis zu 16 Kohlenstoffatomen und X unabhängig von R die Bedeutung von R hat oder einen funktionellen Kohlenwasserstoffrest bedeutet, bei dem zwischen der organischen funktionellen Gruppe und dem Si-Atom 1 bis 6 Kohlenstoffatome vorhanden sind und die organische funktionelle Gruppe gegebenenfalls eine Epoxidgruppe oder eine Methacryloxygruppe sein kann.
   (3) eine zirkonorganische oder titanorganische Verbindung der allgemeinen Formel

      (RO)₄₋ₙMXₙ

      wobei R und X die gleiche Bedeutung wie oben haben und M Ti oder Zr bedeutet
      gegebenenfalls:
   (4) ein organisches Lösemittel
      wobei der Reibungskoeffizient des Vulkanisates gegenüber einer Zusammensetzung, die keine Partikel (D) enthält, reduziert ist.

Die Adhäsion der erfindungsgemäßen Zusammensetzung ist mindestens vergleichbar, bevorzugt jedoch besser ist als eine Zusammensetzung, die Glimmer oder Talk enthält.

Bei den Organosiliciumverbindungen (A) handelt es sich vorzugsweise um lineare, cyclische oder verzweigte Siloxane aus Einheiten der Formel

R²ₛR³ₜSiO_{(4-s-t)/2}

wobei
R² gleich oder verschieden sein kann und SiC-gebundener, aliphatisch ungesättigter Kohlenwasserstoffrest bedeutet,
R³ gleich oder verschieden sein kann und gegebenenfalls substituierter, SiC-gebundener aliphatisch gesättigter Kohlenwasserstoffrest bedeutet,
s 0, 1, 2 oder 3, bevorzugt 0, 1 oder 2, ist und
t 0, 1, 2 oder 3 ist, mit der Maßgabe, dass die Summe s+t kleiner oder gleich 3 beträgt und mindestens zwei Reste R² pro Molekül vorhanden sind.

Die Organosiliciumverbindungen (A) besitzen vorzugsweise eine durchschnittliche Viskosität von 500 bis 100 000 mPas bei 25°C.

Vorzugsweise handelt es sich bei Rest R² um aliphatische Mehrfachbindung aufweisende Kohlenwasserstoffreste mit 2 bis 18 Kohlenstoffatomen, wie Vinyl-, Allyl-, Methallyl-, 2-Propenyl-, 3-Butenyl-, 4-Pentenylrest, 5-Hexenyl-, Butadienyl-, Hexadienyl-, Cyclopentenyl-, Cyclopentadienyl-, Cyclohexenyl-, Ethinyl-, Propargyl- und 2-Propinylrest, wobei solche Reste R² mit 2 bis 6 Kohlenstoffatomen besonders bevorzugt sind, insbesondere der Vinyl- und Allylrest.

Bei Rest R³ handelt es sich vorzugsweise um gegebenenfalls substituierte aliphatisch gesättigte, monovalente Kohlenwasserstoffreste mit 1 bis 18 Kohlenstoffatomen, besonders bevorzugt um solche mit 1 bis 8 Kohlenstoffatomen, insbesondere um den Methylrest.

Beispiele für Reste R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Besonders bevorzugt handelt es sich bei den Organosiliciumverbindungen (A) um lineare Organopolysiloxane mit einer Viskosität 1 000 bis 100 000 mPas bei 25°C der Struktur.

(ViMe₂SiO_{1/2}) (ViMeSiO) ₀₋₅₀ (Me₂SiO) ₃₀₋₂₀₀₀ (ViMe₂SiO_{1/2}),

wobei Me gleich Methyl- und Vi gleich Vinylrest bedeutet.

Als Organosiliciumverbindungen, die Si-gebundene Wasserstoffatome aufweisen, werden vorzugsweise lineare, cyclische oder verzweigte Siloxane aus Einheiten der Formel

R⁴ᵤHᵥSiO_{(4-u-v)/2}

eingesetzt, wobei
R⁴ gleich oder verschieden sein kann und eine oben für R³ angegebene Bedeutung hat,
u 0, 1, 2 oder 3 ist und
v 0, 1 oder 2, bevorzugt 0 oder 1, ist,
mit der Maßgabe, dass die Summe von u+v kleiner oder gleich 3 ist und durchschnittlich mindestens zwei Si-gebundene Wasserstoffatome je Molekül vorliegen.

Die Organosiliciumverbindungen (B) besitzen vorzugsweise eine Viskosität von 10 bis 2·10⁴ mPs bei 25°C.

Bevorzugt ist die Verwendung einer drei oder mehr SiH-Bindungen pro Molekül enthaltenden Organosiliciumverbindung (B). Bei Verwendung eines nur zwei SiH-Bindungen pro Molekül aufweisenden Bestandteils (B) enthält die Organosiliciumverbindung (A) vorzugsweise mindestens drei aliphatische Kohlenstoff-Kohlenstoff-Mehrfachbindungen pro Molekül. Es wird also vorzugsweise die Organosiliciumverbindung (B) als Vernetzer eingesetzt.

Die Organosiliciumverbindung (B) hat einen Gehalt an Si-gebundenem Wasserstoff von bevorzugt 0,002 bis 1,7 Gew.-% Wasserstoff, besonders bevorzugt zwischen 0,1 und 1,7 Gew.-% Wasserstoff.

Besonders bevorzugt handelt es sich bei den Organosiliciumverbindungen (B) um Organopolysiloxane mit einer Viskosität von 10 bis 800 mPas bei 25°C.

Das Polyorganosiloxan (B) ist vorzugsweise in einer solchen Menge in der härtbaren Siliconkautschukmasse enthalten, dass das Molverhältnis von SiH-Gruppen zu Resten mit aliphatischer Kohlenstoff-Kohlenstoff-Mehrfachbindung der Komponente (A) zwischen 0,5 und 5, vorzugsweise zwischen 1,0 und 3,0, liegt.

Als Bestandteil (C), der die Additionsreaktion (Hydrosilylierung) zwischen den Resten mit aliphatischer Kohlenstoff-Kohlenstoff-Mehrfachbindung und Si-gebundenem Wasserstoff fördert, können in den erfindungsgemäßen Zusammensetzungen alle bisher bekannten Hydrosilylierungskatalysatoren verwendet werden.

Beispiele für Hydrosilylierungskatalysatoren (C) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können.

Vorzugsweise werden als Katalysator (C) Platin sowie dessen Verbindungen und Komplexe verwendet.

Die Menge des Katalysators (C) richtet sich nach der gewünschten Vernetzungsgeschwindigkeit und der jeweiligen Verwendung sowie ökonomischen Gesichtspunkten. Die erfindungsgemäßen Zusammensetzungen enthalten Katalysatoren (C) in solchen Mengen, dass ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der vernetzbaren Masse, resultiert.

(D) In der erfindungsgemäßen Zusammensetzung wurde mindestens ein oval bis kugelförmiger Festoff und ein lamellarer Feststoff eingesetzt. Ein zusätzlich nicht verstärkender, vorzugsweise verstärkender Füllstoff ist ebenso möglich:
(1) Geeignete sphärisch-ovale Feststoffe sind aus der Gruppe der Siliciumoxide und Metalloxide, aus rein organischen Verbindungen, Organosiliciumverbindungen, bevorzugt aber aus Metallmischoxiden mit anderen Metallen oder Halbmetallen ausgewählt. Bei den Metalloxiden sind Oxide der Metalle Aluminium, Titan, Zirkonium, Tantal, Wolfram, Hafnium, Zink und Zinn bevorzugt und bei den Siliciumoxiden kolloidale Kieselsäuren und gefällte Kieselsäuren. Bei den Metalloxiden sind Aluminiumoxide wie Korund, Aluminiummischoxide mit anderen Metallen und/oder Silicium, Titanoxide, Zirkonoxide, Eisenoxide besonders bevorzugt.
   Unter den oval bis sphärischen, bzw. kugelförmigen, als Effektfüllstoff eingesetzten Feststoffen sind solche, die sich in der Dicke ihres Wandmaterials unterscheiden. Es können dünnwandige Hohlkugeln oder Microkapseln sein mit der Option ein Wirkstofffluid aufzunehmen, mehrschichtige Wandstrukturen, core-shell Strukturen, dickwandige Hohlkugeln oder Vollkugeln mit Partikelgrössen im Nano- oder Mikrometer-Bereich oder aus Mischungen der Letzteren.
   Die oval bis kugelförmigen Feststoffe können anorganisch, xenomorph, hypidiomorph, mikrokristallin, kristallitähnlich röntgenamorph bis amorph sein oder aus Mischformen unterschiedlicher Verwachsungen/Aggregierungen bestehen und sowohl mono- als auch polymikt sein. Kugeln, Microspheren oder Nanokugeln aus Borosilikatglas, technischem Glas, reinem SiO₂-Glas, aus Calciumcarbonat oder aus keramischen Zusammensetzungen, vorzugsweise alumosilikatisch wie z.B. mullitisch, sind ebenso möglich. Beispielsweise können auch funktionelle Gruppen durch Behandlung der Feststoffe mit funktionellen Silanen wie Vinyltrialkoxysilane, Vinyltriacetoxysilane, Glycidoxypropyltrialkoxysilane oder Methacryloxypropyltrialkoxysilane erreicht werden, die nach dem Stand der Technik aufgebracht werden können. Beispiele für weitere organofunktionelle Gruppen sind: Acrylgruppen, Epoxygruppen, Hydroxygruppen, Alkoxygruppen.
   Es können auch polymere organische Partikel oder Pulver ebenfalls mit Partikelgrössen im Nano- bis Mikrometerbereich oder Mischungen der Letzteren enthalten sein, z.B. aus Vinylacetat/Ethylen-Copolymeren, Polyacrylnitrilpulvern, Acrylaten oder Styrolacrylaten. Bevorzugt sind Partikel aus Organosiliciumverbindungen, bei denen es sich um kugelige, feste Siliconharze, vorzugsweise MQ-Harze, TD Harze mit Glaspunkten um ca. 30°C und/oder Siliconelastomere handeln kann, die auch funktionelle Gruppen enthalten können, die ggf. nach Methoden gemäss dem Stand der Technik aufgebracht sind.
   Die erfindungsgemäß eingesetzten sphärischen Effektfüllstoffe haben einen Durchmesser von 0.01 bis 100 µm, bevorzugt 1 bis 40 µm, besonders bevorzugt 2 bis 25 µm.
(2) Bei den notwendigerweise in (D) enthaltenen lamellaren Feststoffen wurde mindestens ein Stoff aus der Gruppe der natürlichen Phyllosilicate wie Glimmer oder Tonminerale einschliesslich deren calcinierte Varianten, aus der Gruppe synthetischer Feststoffe wie Metall- oder Glasflakes oder der Gruppe plättchenförmiger Metalloxide/-hydroxide oder Tektosilikate wie Blätterzeolithe ausgewählt. Beispiele natürlicher Phyllosilikate sind die Dreischichtsilikate der Talk-Pyrophyllitgruppe, die di- bis trioktaedrischen Dreischichtsilikate der Glimmergruppe wie Muskovit, Paragonit, Phlogopit, Biotit, die Vierschichtsilikate der Chloritgruppe und Vertreter der Tonmineralgruppe, wie Kaolinit, Montmorillonit, Illit.
   Die erfindungsgemäß in (D) eingesetzten, lamellaren Füllstoffe können teilweise unbehandelt oder mit funktionellen Silanen oberflächenbehandelt sein, wodurch eine geringfügige verstärkende Wirkung erzielt werden kann.
   Beispiele für funktionelle Silane, mit denen die Füllstoffe oberflächenbehandelt sein können, sind Vinyltrialkoxysilane, Vinyltriacetoxysilane, Glycidoxypropyltrialkoxysilane oder Methacryloxypropyltrialkoxysilane. Auch Mono-, Di- und Tetraalkoxysilane sind möglich, die ausser der Alkoxyfunktion ebenfalls organische Funktionen tragen können.
   Lamellare Feststoffe sind unter der Voraussetzung einer ausreichenden Delamination immer dadurch gekennzeichnet, dass ihre Partikellänge numerisch grösser als ihre Dicke ist. In Abhängigkeit davon, ob es sich um natürliche Schichtsilikate oder die bevorzugt calcinierten Varianten handelt, ist die Dicke üblicherweise 10 bis 20 mal geringer als ihre Länge. Die erfindungsgemäß eingesetzten, geringfügig verstärkenden lamellaren Feststoffe haben eine Partikellänge von 0,01 bis 80 µm, bevorzugt 0.1 bis 20 µm, besonders bevorzugt 0,8 bis 20 µm.
(3) In (D) kann zusätzlich ein verstärkender Feststoff in Kombination mit dem lamellaren Feststoff eingesetzt werden, der über eine hohe spezifische Oberfläche >50 m²/g oder über eine hohe Ölzahl > 100 verfügt, mit der Prämisse, dass ein Viskositätsanstieg der vernetzbaren Masse durch die verstärkenden Anteile so gering wie möglich gehalten wird.

Verstärkende Füllstoffe können auch diverse nanoskalige Komponenten sein: Alumosilikate, Caliumcarbonat, bevorzugt jedoch Siliciumdioxid. Beispiele für besonders bevorzugte verstärkende Feststoffe sind pyrogene oder gefällte Kieselsäuren mit BET-Oberflächen von mindestens 50 m²/g sowie Furnace-Ruß und Acetylen-Ruß, wobei die genannten Kieselsäuren hydrophilen Charakter haben oder nach bekannten Verfahren hydrophobiert sein können. Typische Beispiele für verstärkende Feststoffe mit hoher Ölabsorption sind Diatomeenerden, die in calicinierter oder bevorzugt in natürlicher Form eingesetzt werden können.

Der lamellare und ein zusätzlich verstärkender Festoff in (D) kann in Mengenverhältnissen von 2 : 1 und 1 : 2 vorliegen, bevorzugt jedoch im Verhältnis 1 : 1.

Die erfindungsgemäßen Zusammensetzungen sind dadurch gekennzeichnet, dass der Anteil aller enthaltenen partikulären Feststoffe in der vernetzbaren Kompositmasse mindestens 15% beträgt, bevorzugt 30% bis 50% und besonders bevorzugt 50% bis 85%, jeweils bezogen auf die Gesamtformulierung von 100 Gewichtsteilen.

Es zeigt sich, dass sich das Verhältnis von lamellaren zu oval bis kugeligen Feststoffen in der vernetzbaren Masse im Rahmen von 1 : 20 bis 20 :1 bewegen kann, bevorzugt jedoch bei 1 : 10, um einer Reduzierung der Adhäsion durch lamellare Anteile entgegen zu wirken. Dabei wurde die Art, Einsatzmenge und Funktionalisierung des enthaltenen lamellaren Feststoffes so gewählt, dass bei möglichst besseren Adhäsionswerten der Reibungskoeffizient mindestens so gut ist wie in eben einer solchen Zusammensetzug (D), die sich durch einen höheren Gehalt an natürlichen Schichtsilikaten, wie Talk oder Glimmer, auszeichnet.

Das Verhältnis von sphärischem Feststoff zu lamellarem Feststoff einschliesslich eines zusätzlichen, bevorzugt verstärkenden Feststoffs weicht davon ab und kann grundsätzlich 1 : 1 sein, liegt jedoch bevorzugt bei 3 : 1 und besonders bevorzugt bei 6 : 1.

In der erfindungsgemässen Zusammensetzung ist mindestens eine Komponente (E) enthalten aus der folgenden Gruppe:
Beispiele (1) für organische Verbindungen (E) sind Kohlenwasserstoffverbindungen mit mindestens 8 Kohlenstoffatomen, wobei das Kohlenwasserstoffgerüst ggf. durch Heteroatome wie N, O, P oder S unterbrochen sein kann und die freien Valenzen der Heteroatome durch Wasserstoff oder einwertige Kohlenwasserstoffreste abgesättigt sind.
Beispiele (2) und bevorzugt für (E) sind Organosiliciumverbindungen (E), wie ein Silan der allgemeinen Formel:

   (RO)₄₋ₙSiXₙ

   wobei R einen einwertigen Kohlenwasserstoffrest bedeutet mit bis zu 16 Kohlenstoffatomen und X unabhängig von R die Bedeutung von R hat oder einen funktionellen Kohlenwasserstoffrest bedeutet, bei dem zwischen der organischen funktionellen Gruppe und dem Si-Atom 1 bis 6 Kohlenstoffatome vorhanden sind und die organische funktionelle Gruppe, gegebenfalls eine Epoxidgruppe oder Methacryloxygruppe sein kann.
Beispiele (3) für eine metallorganische Verbindung (E) ist eine zirkonorganische oder titanorganische Verbindung der allgemeinen Formel:

   (RO)₄₋ₙMXₙ

   wobei R und X die gleiche Bedeutung wie oben haben und M Ti oder Zr bedeutet.

Die Verbindungen (E) sind in Mengen bezogen auf die Gesamtzusammensetzung von 0.05% bis 15% in der Zusammensetzung enthalten, bevorzugt 0.1% - 7% und besonders bevorzugt 0.5% bis 5%.

Außer den Komponenten (A) bis (E) können die erfindungsgemäßen härtbaren Zusammensetzungen noch alle weiteren Hilfsstoffe (F) enthalten, die auch bisher zur Herstellung von additionsvernetzbaren Zusammensetzungen eingesetzt wurden, mit der Maßgabe, dass die weiteren Stoffe (F) unterschiedlich sind zu Komponente (A), (B), (C) und (D).

Beispiele für weitere Stoffe (F) sind verstärkende Füllstoffe, nicht verstärkende Füllstoffe, harzartige Polyorganosiloxane, die von den Siloxanen (A) und (B) verschieden sind, Dispergierhilfsmittel, Lösungsmittel, Viskositätsmodifyer, Haftvermittler, Pigmente, Farbstoffe, Weichmacher, organische Polymere, Hitzestabilisatoren, Inhibitoren und Stabilisatoren.

Beispiele gebräuchlicher Inhibitoren, die als Komponente (F) eingesetzt werden können, sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Der Inhibitorgehalt der erfindungsgemäßen Zusammensetzungen beträgt vorzugsweise 0 bis 50 000 ppm, besonders bevorzugt 50 bis 2000 ppm, insbesondere 100 bis 800 ppm.

Beispiele für weitere Stoffe (F) sind Füllstoffe, wie z.B. nicht aktive Füllstoffe die von den Stoffen (D) verschieden sind, Stoffe zur Verbesserung der Oberflächeneigenschaften wie Haftvermittler, Reaktivverdünner, Viskositätsmodifyer, Verarbeitungshilfsmittel, wie etwa Weichmacher, Pigmente, UV-Absorber, lösliche Farbstoffe, Duftstoffe, Fungicide, rein organische Harze, Korrosionsinhibitoren, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wobei es sich bei Komponente (F) bevorzugt auch um Haftvermittler, handelt.

Beispiele für nichtverstärkende Füllstoffe, die als weitere Stoffe (F) eingesetzt werden können und unterschiedlich sind zu Komponente (D), sind Quarzmehl, Calciumsilikat, Zirkoniumsilicat, Zeolithe, Metalloxidpulver, wie Aluminium-, Titan-, Eisen- oder Zinkoxid, Bariumsilikat, Calciumcarbonat und ggf. Calcium- und Bariumsulfat, wenn eine inhibierende Wirkung ausgeschlossen werden kann, sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m²/g.
Beispiele für Weichmacher, die als Komponente (F) eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Haftvermittler sind Epoxysilane, Methacryloxysilane oder Polysiloxane.

Beispiele für Hitzestabilisatoren sind Übergangsmetallfettsäuresalze, wie Eisenoctoat, Übergangsmetallsilanolate, wie Eisensilanolat, sowie Cer(IV)-Verbindungen.

Falls zusätzliche Füllstoffe eingesetzt werden, handelt es sich um Mengen von bevorzugt 1 bis 20 Gewichtsteilen, besonders bevorzugt 2 bis 5 Gewichtsteilen, jeweils bezogen auf die Gesamtformulierung von 100 Gewichtsteilen.

Zusätzlich kann auch Wasser und Lösemittel wie z.B. Toluol, Xylol, Benzine, Essigsäureester eingesetzt werden, bevorzugt ist, wasserfrei und lösemittelfrei zu arbeiten:

Die erfindungsgemäßen Zusammensetzungen können, falls erforderlich, in Flüssigkeiten wie Lösemittel oder Wasser gelöst, dispergiert, suspendiert oder emulgiert werden. Die erfindungsgemäßen Zusammensetzungen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Zusammensetzungen darstellen, wie dies bekanntermaßen bei den in Fachkreisen häufig als RTV-1, RTV-2, LSR und HTV bezeichneten Zusammensetzungen der Fall sein kann.

Der Mischprozess zur Herstellung der erfindungsgemäßen Zusammensetzungen ist bevorzugt ein stärkeres Einscheren. Je nach Konsistenz und Viskosität des Basismediums kann der Mischprozess an Walzwerken, Kneter, Dissolver, Z-Mischer, Kugelmühlen oder einfachen Rührwerken erfolgen. Der Mischprozess wird vorzugsweise schon der Einfachheit halber bei Umgebungsdruck durchgeführt. Jedoch ist auch ein Mischen bei reduziertem oder erhöhtem Druck möglich. Ebenso der Einfachheit halber wird der Mischprozess bevorzugt bei Umgebungstemperatur durchgeführt. Es ist jedoch auch möglich, bei erhöhter Temperatur oder unter Kühlen zu mischen.
Die erfindungsgemäßen Zusammensetzungen haben den Vorteil, dass sie einfach in der Herstellung und gut verarbeitbar sind.
Des weiteren haben die erfindungsgemäßen Zusammensetzungen den Vorteil, dass daraus Vulkanisate hergestellt werden können, die eine grifftrockene Oberfläche mit geringem Reibungskoeffizienten und hoher Shore Härte aufweisen.

Die erfindungsgemäßen Zusammensetzungen können unter den gleichen Bedingungen vernetzen gelassen werden wie bisher bekannte vernetzbare Zusammensetzungen auf der Basis von Organosiliciumverbindungen. Dabei können als Herstellverfahren alle gängigen Prozesse zur Verarbeitung von Siliconkautschuken angewandt werden. Beispiele hierfür sind Kalandrieren, Formpressen, Formspritzen, Extrudieren und Gießen.

Ein weiterer Gegenstand der vorliegenden Erfindung sind Formkörper, hergestellt durch Verwendung der erfindungsgemäßen Zusammensetzungen.

Die erfindungsgemässen Zusammensetzungen können auch zum Beschichten von textilen Flächengebilden, wie Gewebe, Gewirke, Gelege, Gestricke, Vliese, Filze etc., verwendet werden. Die Beschichtung kann im Rakelverfahren, Tauchverfahren, Extrusionsverfahren, Spritz- oder Sprühverfahren, aufgebracht werden. Auch alle Arten von Rollenbeschichtungen, wie Gravurwalzen, Pflatschen oder Auftrag über Mehrwalzensysteme sowie Siebdruck sind möglich.

Die beschichteten Gewebe können überall da eingesetzt werden, wo reduzierte Oberflächenreibung, Opazität, reduzierter Wärmewert und bei Topcoat-Anwendungen eine hohe Weiterreißfestigkeit und Reißfestigkeit vorteilhaft sind. Beispiele sind Gleitschirme, Fallschirme, Heißluftballons, Freizeitkleidung, Freizeitartikel wie Zelte oder Rucksäcke, Segel oder Airbags. Im technischen Bereich werden die beschichteten Gewebe vorteilhaft für Förderbänder, Kompensatoren, Markisen, textiles Bauen oder im Isolationsbereich eingesetzt.

Ein weiterer Gegenstand der vorliegenden Erfindung sind mit den erfindungsgemäßen Zusammensetzungen beschichtete textile oder nichttextile Flächengebilde.

Durch Vernetzung der erfindungsgemäßen Zusammensetzungen werden Vulkanisate erhalten, die vorteilhafterweise eine gute Adhäsion und eine Oberfläche haben, die ohne Nachbehandlung einen reduzierten Reibungskoeffizienten aufweist.
Die erfindungsgemäßen Vulkanisate haben weiterhin den Vorteil, dass sie einen reduzierten Heizwert aufweisen.

Die erfindungsgemäßen durch Anlagern von Si-gebundenem Wasserstoff an aliphatische Mehrfachbindung vernetzbaren Zusammensetzungen können unter den gleichen Bedingungen vernetzen gelassen werden, wie die bisher bekannten durch Hydrosilylierungsreaktion vernetzbaren Zusammensetzungen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

Die erfindungsgemäßen Zusammensetzungen sowie die erfindungsgemäß daraus hergestellten Vernetzungsprodukte können für alle Zwecke eingesetzt werden, für die auch bisher zu Elastomeren vernetzbare Organopolysiloxan-Zusammensetzungen bzw. Elastomere verwendet wurden. Dies umfaßt insbesondere die Siliconbeschichtung, die Herstellung von Formteilen, z.B. im Spritzgußverfahren, Vakuumextrusionsverfahren, Extrusionsverfahren, Formgießen und Formpressen, und Abformungen, die Verwendung als Dicht-Einbett- und Vergußmassen usw.

Überraschenderweise wurde gefunden, dass, wenn eine Mischung bestehend aus Feststoffpartikeln unterschiedlicher Morphologie, die bevorzugt rund oder lamellar ist, unterschiedlicher Grössenverhältnisse, Zusammensetzungen und teilweiser Oberflächenfunktionalisierung in Siliconkautschukmassen oder Siliconkautschukbeschichtungen für textile Gewebe, Folien oder sonstige Substrate eingesetzt wird, eine merkliche Verbesserung von gleich mehreren Produkteigenschaften im Vergleich zu bestehenden Systemen mit nur einem ovalen bis sphärischen Feststoff, nur einem natürlichen, lamellaren Feststoff und den üblichen verstärkenden Füllstoffen erzielt werden kann.

Die besondere Feststoffzusammensetzung der erfindungsgemäßen Zusammensetzung zeichnet sich wie folgt dadurch aus:
(1) dass der Reibungskoeffizient des Vulkanisates der erfindungsgemäßen Zusammensetzung bei annähernd gleichbleibend guter Adhäsion signifikant reduziert wird, im Vergleich zu einem üblichen, nicht partikelmodifizierten Siliconkautschuk. Die Verringerung des Reibungskoeffizienten beträgt mindestens 10%, bevorzugt 20%, besonders bevorzugt bis zu 80%.
(2) dass die Adhäsion zu Siliconkautschuk-beschichteten Substraten und zu nicht beschichteten textilen Substraten nicht wesentlich unter einer, an lamellaren Feststoffen freien Beschichtung liegt, bzw. bevorzugt erhöht ist, und mindestens die Adhäsion eines Vulkanisates mit ausschließlich sphärischen Anteilen erreicht, bei gleichzeitig niedrigem Reibungskoeffizienten des Vulkanisates wie er teilweise auch von Beschichtungen, reich an natürlichen Schichtsilicaten bekannt ist.
(3) dass ein Viskositätsbereich von 1 000 bis 1 000 000 mPas vorliegt, bevorzugt 5 000 bis 100 000 mit dem besonderen Vorzug eines dilatanten und rheopexen Verhaltens des grundsätzlich niederviskosen Kompositkautschuks mit sehr guter Verarbeitbarkeit.

### Beispiele:

In den nachfolgenden Rezeptur-Beispielen erfindungsgemäßer Zusammensetzungen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Basisformulierung 1 (B-1)

83 g eines vinylendständigen Dimethylpolysiloxans mit einer Viskosität von 1000 mPas werden mit 55 g eines silikatischen Füllstoffes zu einer Grundmasse vermischt. Als lamellarer Feststoff wurden 20 g eines Schichtsilikates (feinkörniger Talk) und 20 g eines Aluminiumhydrates mittels eines Dissolvers gut eingeschert bei Umfanggeschwindigkeiten der Dissolverscheibe von mindestens 12 m/sec. In diesen Mahlgutansatz werden 6 g eines Tetraethylsilikates, 0.4 g Trimethylsilanol und 1.2g Platinkatalysator (Platin-1,3-Divinyl-1,1,3,3-tetramethyldisiloxan-Komplex mit 1 Gew.-% Pt), 10 g eines Methylhydrogenpolysiloxanes mit Haftvermittler (Wasserstoffgehalt ist 1,25 Gew.-%, Viskosität ist 10 bis 20 mPa s) und 0,6 g Ethinylcyclohexanol eingearbeitet. Die eingestellte Viscosität beträgt 51 600 mPas.

### Basisformulierung 2 (B-2)

In die Basisformulierung (B-1) wurde an Stelle des lamellaren, feinkörnigen Extenders, 80 g eines gröberkörnigen alumosilikatischen Füllstoffes mit überwiegend sphärischer Morphologie eingeschert bei vergleichbar eingestellter Viskosität von 48 800 mPas.

Die so erhaltenen Siliconkautschukmassen (B-1) und (B-2) wurden bei 180°C innerhalb von 3 Minuten vulkanisiert.

### Beispiel 1, (BE-1), optimierte Formulierung mit Talk als Effektfüllstoff

128 g einer Grundmasse aus vinylendständigem Dimethylpolysiloxan mit einer Viskosität von 1000 mPas und nicht funktionalisiertem, silikatischem Füllstoff werden mit zusätzlichen 70 g Dimethylpolysiloxan und 110 feinkörnigem, lamellaren Feststoff (feinkörniger Talk) mittels eines Dissolvers mit Umfangsgeschwindigkeiten der Dissolverscheibe von mindestens 12 m/s gut eingeschert. In diesen Mahlgutansatz werden 22.6 g eines Dodecen-1, 6 g eines Tetraethylsilikates, 0.4 g Trimethylsilanol und 1.2g Platinkatalysator (Platin-1,3-Divinyl-1,1,3,3-tetramethyldi-siloxan-Komplex mit 1 Gew.-% Pt), 10 g eines Methylhydrogenpolysiloxanes mit einem Haftvermittler (Wasserstoffgehalt von 1,25 Gew.-% und Viskosität von 10 bis 20 mPa s) und 0,6 g Ethinylcyclohexanol eingearbeitet. Die eingestellte Viscosität betrug 53 600 mPas.

### Beispiel 2, (BE-2), Formulierung mit Glimmer als Effektfüllstoff

In die Beispielformulierung (BE-1) wurde an Stelle des feinkörnigen Talks, 56 g eines grobkörnigen Muskovitglimmers eingeschert bei vergleichbar eingestellter Viskosität von 57 200 mPas.

### Beispiel 3, (BE-3), Formulierung mit sphärischen Partikeln als Effektfüllstoff

In die Beispielformulierung (BE-1) wurden an Stelle des feinkörnigen Talks, 16 g nanoscalige, sphärische Partikel auf Basis Quarzgut eingeschert bei vergleichbar eingestellter Viskosität von 50 800 mPas.

### Beispiel 4, (BE-4), Formulierung mit sphärischen Partikeln als Effektfüllstoff

In die Beispielformulierung (BE-1) wurden an Stelle des feinkörnigen Talks, 210 g µm-grosse überwiegend sphärische Partikel auf Basis Alumosilikat eingeschert bei vergleichbar eingestellter Viskosität von 48 400 mPas.

### Beispiel 5, (BE-5), mit optimierter Grundmasse und sphärischen Partikeln als Effektfüllstoff

In die Beispielformulierung (BE-1) wurde eine modifizierte Grundmasse (128 g) bestehend aus vinylendständigem Dimethylpolysiloxan mit einer Viskosität von 1000 mPas und verstärkend wirkendem funktionalisierten, lamellaren, calcinierten Feststoff eingesetzt. An Stelle des feinkörnigen Talks als Effektfüllstoff wurden hier 335 g µm-grosse, überwiegend sphärische Partikel auf Basis Alumosilikat als Effektfüllstoffe eingeschert bei vergleichbar eingestellter Viskosität von 64 400 mPas.

### Beispiel 6, (BE-6), mit modifizierter Grundmasse und sphärischen Partikeln als Effektfüllstoff

In die Beispielformulierung (BE-5) wurde eine modifizierte Grundmasse (128 g) bestehend aus vinylendständigem Dimethylpolysiloxan mit einer Viskosität von 1000 mPas und nicht funktionalisiertem, lamellaren, calcinierten Feststoff eingesetzt. Die Zugabemenge an eingescherten, überwiegend sphärischen Partikeln auf Basis Alumosilikat als Effektfüllstoff ist 390 g. Die Viskosität beträgt 53 600 mPas.

### Beispiel 7, (BE-7), mit modifizierter Grundmasse und sphärischen Feststoff als Effektfüllstoff

In die Beispielformulierung (BE-5) wurde eine modifizierte Grundmasse (128 g) bestehend aus vinylendständigem Dimethylpolysiloxan mit einer Viskosität von 1000 mPas und verstärkend wirkendem funktionalisierten, lamellaren, calcinierten Feststoff in Kombination mit nicht funktionalisiertem, silikatischen Füllstoff eingesetzt. Die Zugabemenge an eingescherten, überwiegend sphärischen Partikeln auf Basis Alumosilikat als Effektfüllstoff ist 300 g. Die Viskosität beträgt 53 600 mPas.

### Beispiel 8, (BE-8), mit modifizierter Grundmasse und sphärischen Partikeln als Effektfüllstoff

In die Beispielformulierung (BE-5) wurde eine modifizierte Grundmasse (128 g) bestehend aus vinylendständigem Dimethylpolysiloxan mit einer Viskosität von 1000 mPas und einem verstärkend wirkenden funktionalisierten, lamellaren, calcinierten Feststoff in Kombination mit nicht funktionalisiertem silikatischen Füllstoff eingesetzt. Abweichend von (BE-5) wurden 22.6 g Dodecen-1 durch 8.0 g Trimethoxyisooctylsilan ersetzt. Die Zugabemenge an eingescherten, überwiegend sphärischen Partikeln auf Basis Alumosilikat als Effektfüllstoff ist 300 g. Die Viskosität beträgt 51 200 mPas.

### Beispiel 9, (BE-9), mit modifizierter Grundmasse und sphärischen Partikeln als Effektfüllstoff

In die Beispielformulierung (BE-5) wurde eine modifizierte Grundmasse (128 g) bestehend aus vinylendständigem Dimethylpolysiloxan mit einer Viskosität von 1000 mPas und verstärkend wirkendem, funktionalisierten, lamellaren alumosilikatischen Feststoff in Kombination mit nicht funktionalisiertem silikatischen Füllstoff eingesetzt. Abweichend von (BE-5) wurden 22.6 g Dodecen-1 durch 8.0 g Triethoxyisooctylsilan ersetzt. Die Zugabemenge an eingescherten, überwiegend sphärischen Partikeln auf Basis Alumosilikat als Effektfüllstoff ist 300 g. Die Viskosität beträgt 72 000 mPa s.

Die so erhaltenen Siliconkautschukmassen (BE-1 bis BE-9) wurden bei 170°C innerhalb von 2 Minuten vulkanisiert.

### Messergebnisse:

Die erfindungsgemäße Zusammensetzung wurde als Topcoat und als Basisbeschichtung untersucht.
Im folgenden werden die Ergebnisse der Bestimmung von Adhäsion und des Reibungskoeffizienten Topcoat-beschichteter Gewebe vorgestellt.

Das Basecoat-beschichtete Nylongewebe (S-1 bis S-2) wurde zu Vergleichszwecken ohne eine Topcoat-Beschichtung mit der erfindungsgemäßen Zusammensetzung untersucht und wie in den Beispielen (B-1 bis B-2) und (BE-1 bis BE-9) dokumentiert, mit Topcoat-Beschichtungen der erfindungsgemäßen Zusammensetzungen. Die Messungen zur Adhäsion wurden gemäß DIN 53530 und die Messungen zur Bestimmung des Reibungskoeffizienten (statisch / dynamisch) des Vulkanisates gemäss DIN 53375 durchgeführt. Die Messergebnisse sind in Tabelle 1 dokumentiert.

Alle Tests wurden an mit Basecoat-beschichtetem Nylongewebe (Substrat) durchgeführt, wobei die Basisbeschichtung aus Elastosil LR 6250 F(Handelsprodukt der Wacker Chemie AG) besteht. Das Auftragsgewicht des Basecoats ist ca. 60g/m². Die Topcoat-Beschichtung der Gewebe erfolgte mittels Rakelauftrag.

Bei den Vergleichsbeispielen (S1-S2) handelt es sich um Substrate, die nicht mit einem Topcoat der erfindungsgemäßen Zusammensetzung beschichtet wurden:
(S-1): Basecoat-beschichtetes Nylongewebe ohne Topcoat.
(S-2): Basecoat-beschichtetes Nylongewebe, zu Vergleichzwecken mit einem Topcoat Elastosil EL 47005 (Handelsprodukt der Wacker Chemie AG) beschichtet.

Aus den Basisformulierungen (B-1 bis B-2) und den Beispielen (BE-1 bis BE-4) mit optimierter Rezeptur und den Beispielen (BE-5 bis BE-9) mit optimierter Rezeptur und optimierter Grundmasse werden Silikonkautschuke mit folgenden Eigenschaften erhalten:

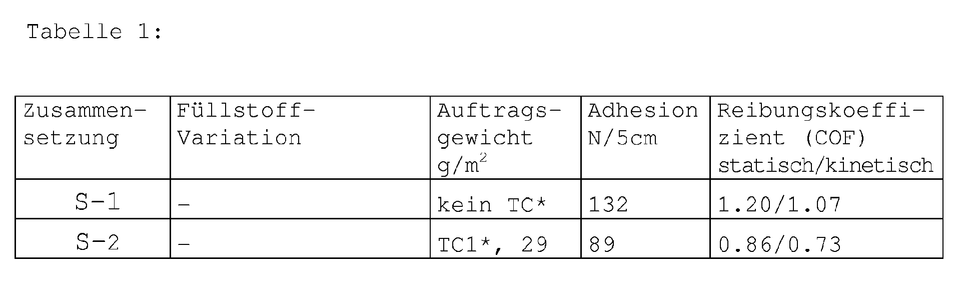

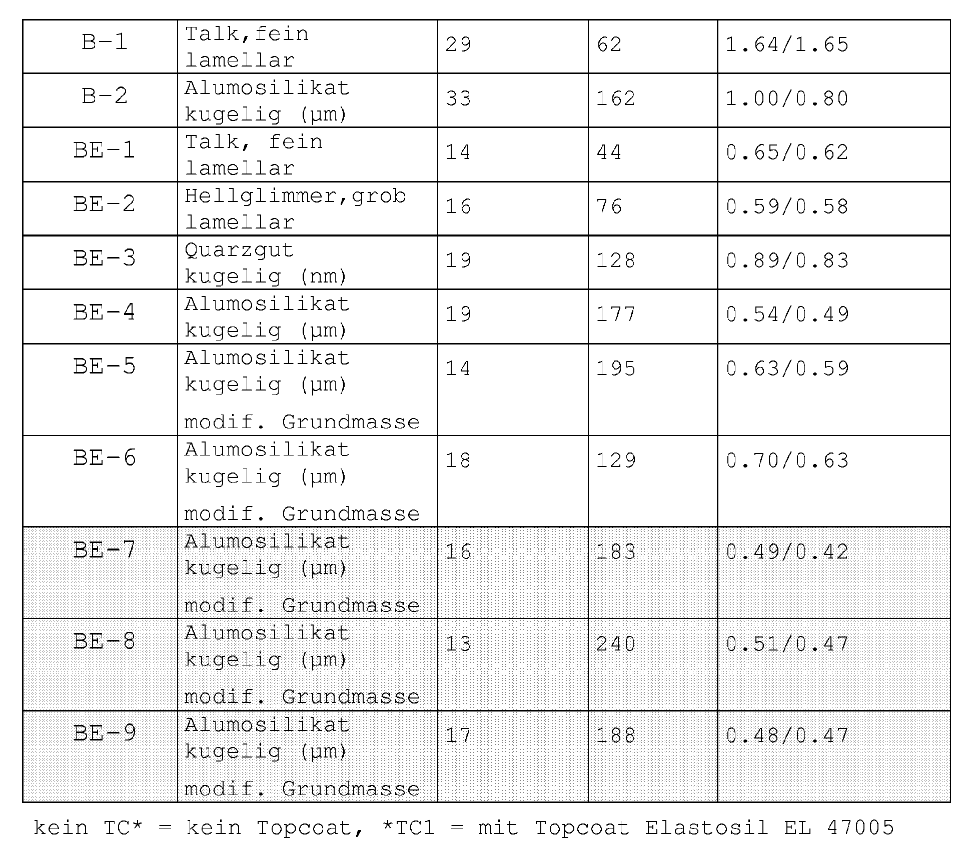

Im folgenden werden Basisbeschichtungen mit mittleren Beschichtungsgewichten von 50 bis 65 g/m² vorgestellt.
Die Tests wurden an unbeschichtetem Nylongewebe durchgeführt.
Die Gewebe wurden mittels Rakelauftrag beschichtet.

Das unbeschichtete Original-Nylongewebe wurde mit Basisbeschichtungen der erfindungsgemäßen Zusammensetzungen versehen, die durch die Beispiele BE-10 bis BE-15 dokumentiert sind. Die Messungen zur Adhäsion wurden gemäß DIN 53530 und die Messungen zur Bestimmung des Reibungskoeffizienten (statisch/ dynamisch) des Vulkanisates gemäß DIN 53375 durchgeführt. Die Messergebnisse sind in Tabelle 2 dargestellt.

Bei dem Vergleichsbeispiel (S-3) handelt es sich um ein Substrat (Nylongewebe), das mit einem Basecoat bestehend aus Elastosil EL LR 6250 F (Handelsprodukt der Wacker Chemie AG) beschichtet wurde.

Aus den Beispielen (BE-10) bis (BE-13) mit optimierter Rezeptur und den Beispielen (BE-14) bis (BE-15) mit optimierter Rezeptur und optimierter Grundmasse werden Siliconkautschuke mit folgenden Eigenschaften erhalten:

### Beispiel 10, (BE-10), Formulierung mit Hellglimmer als Effektfüllstoff

128 g einer Grundmasse aus vinylendständigem Dimethylpolysiloxan mit einer Viskosität von 1000 mPas und nicht funktionalisiertem, silikatischen Füllstoff werden mit zusätzlichen 70 g Dimethylpolysiloxan und 60 g eines grobkörnigen Schichtsilikates (Hellglimmer) mittels Dissolver bei Umfangsgeschwindigkeiten der Dissolverscheibe von mindestens 12 m/sec gut eingeschert. In diesen Mahlgutansatz werden 22.6 g eines Dodecen-1, 6 g eines Tetraethylsilikates, 0.4 g Trimetylsilanol und 1.2g Platinkatalysator (Platin-1,3-Divinyl-1,1,3,3-tetramethyldisiloxan-Komplex mit 1 Gew.-% Pt), 10 g eines Methylhydrogenpolysiloxanes mit einem Haftvermittler (Wasserstoffgehalt von 1,25 Gew.-% und Viskosität von 10 bis 20 mPas) und 0,6 g Ethinylcyclohexanol eingearbeitet. Die eingestellte Viscosität beträgt 74 000 mPas.

### Beispiel 11, (BE-11), Formulierung mit Dunkelglimmer als Effektfüllstoff

In die Beispielformulierung (BE-10) wurden an Stelle des Hellglimmers 80 g eines grobkörnigen Dunkelglimmers eingeschert mit resultierender Viskosität von 46 00mPas.

### Beispiel 12, (BE-12), Formulierung mit nanoscaligen sphärischen Partikeln als Effektfüllstoff

In die Beispielformulierung (BE-10) wurden an Stelle des lamellaren Feststoffes (gröberkörner Hellglimmer) 16 g nanoscalige, sphärische Partikel auf Basis Quarzgut eingeschert bei vergleichbar eingestellter Viskosität von 60 000 mPas.

### Beispiel 13, (BE-13), Formulierung mit einem Füllstoff-Batch bestehend aus lamellaren und sphärischen Extendern

In die Beispielformulierung (BE-10) wurden an Stelle des Hellglimmers, 95 g eines Batches eingeschert, bestehend aus einem lamellaren Feststoff (feinteiliger Talk) und weitgehend sphärischen Alumosilikat Partikeln im Verhältnis von 1:1 mit resultierender Viskosität von 42 000 mPa s.

### Beispiel 14, (BE-14), Formulierung mit modifizierter Grundmasse und mit sphärischen Partikeln als Effektfüllstoff

Abweichend von der Beispielformulierung (BE-10) wurde eine modifizierte Grundmasse (128 g) bestehend aus vinylendständigem Dimethylpolysiloxan mit einer Viskosität von 1000 mPas und einem verstärkend wirkenden, funktionalisierten, lamellaren calcinierten Feststoff eingesetzt. Desweiteren wurden an Stelle des gröberteiligen Hellglimmers als Effektfüllstoff 335g µm-grosse sphärische Partikel auf Basis Alumosilikat eingeschert bei resultierender Viskosität von 64 400 mPas.

### Beispiel 15, (BE-15), Formulierung mit modifizierter Grundmasse und mit sphärischen Partikeln als Effektfüllstoff

Abweichend von der Beispielformulierung (BE-14) wurde eine modifizierte Grundmasse (128 g) bestehend aus vinylendständigem Dimethylpolysiloxan mit einer Viskosität von 1000 mPas und verstärkend wirkendem, funktionalisierten, lamellaren calcinierten Feststoff in Kombination mit nicht funktionalisiertem silikatischen Füllstoff eingesetzt. Die Zugabemenge an eingescherten, überwiegend sphärischen Partikeln auf Basis Alumosilikat als Effektfüllstoff ist 300 g. Die Viskosität beträgt 53 600 mPas.

**Tabelle 2:**

| Zusammensetzung | Füllstoff-Variation | Auftragsgewicht g/m² | Adhesion N/5cm | Reibungskoeffizient (COF) statisch/kinetisch |
|---|---|---|---|---|
| S-3 | - | 55 | 232 | 1,2 / 0,98 |
| BE-10 | Hellglimmer,grob lamellar | 61 | 68 | 0,33 / 0,20 |
| BE-11 | Dunkelglimmer grob, lamellar | 59 | 47 | 0,26 / 0,20 |
| BE-12 | Quarzgut kugelig (nm) | 52 | 203 | 0,35 / 0,28 |
| BE-13 | Alumosilikat (µm) kugelig + Talk lamellar (1:1) | 52 | 115 | 0,44 / 0,34 |
| BE-14 | Alumosilikat kugelig (µm) modif. Grundmasse | 59 | 178 | 0,27 / 0,20 |
| BE-15 | Alumosilikat kugelig (µm) modif. Grundmasse | 61 | 151 | 0,21 / 0,14 |

## Patentansprüche

1. Zusammensetzung enthaltend:
- (A, B) durch Additionsreaktion vernetzende Organosiliciumverbindungen
- (D) mindestens einen ovalen bis kugelförmigen Feststoff und mindestens einen lamellaren Feststoff
- und weiterhin mindestens eine Komponente (E) aus der folgenden Gruppe:
- (1) Kohlenwasserstoffverbindung mit mindestens 8 Kohlenstoffatomen, wobei das Kohlenwasserstoffgerüst ggf. durch Heteroatome wie N, O, P oder S unterbrochen sein kann und die freien Valenzen der Heteroatome durch Wasserstoff oder einwertige Kohlenwasserstoffreste abgesättigt sind
- (2)Silan der allgemeinen Formel
(RO)₄₋ₙSiXₙ
wobei R einen einwertigen Kohlenwasserstoffrest bedeutet mit bis zu 16 Kohlenstoffatomen und X unabhängig von R die Bedeutung von R hat oder einen funktionellen Kohlenwasserstoffrest bedeutet, bei dem zwischen der organischen funktionellen Gruppe und dem Si-Atom 1 bis 6 Kohlenstoffatome vorhanden sind und die organische funktionelle Gruppe gegebenenfalls eine Epoxidgruppe oder eine Methacryloxygruppe sein kann
- (3) eine zirkonorganische oder titanorganische Verbindung der allgemeinen Formel
(RO)₄₋ₙMXₙ
wobei R und X die gleiche Bedeutung wie oben haben und M Ti oder Zr bedeutet
gegebenenfalls:
- (4) ein organisches Lösemittel
wobei der Reibungskoeffizient des Vulkanisates gegenüber einer Zubereitung, die keine Partikel (D) enthält, reduziert ist.

2. Zusammensetzung nach Anspruch 1, **dadurch gekennzeichnet, dass** die Komponente (E) ein Silan der allgemeinen Formel (RO)₄₋ₙSiXₙbedeutet, wobei R eine Methyl- oder Ethylgruppe ist, n = 1 ist und X einen C8 - C12 Kohlenwasserstoffrest bedeutet.

3. Zusammensetzung nach Anspruch 1, **dadurch gekennzeichnet, dass** der ovale bis kugelförmige oder lamellare Feststoff, oder beide, durch eine Oberflächenbelegung durch Silan funktionalisiert ist, der allgemeinen Formel
R₄₋ₙSiXₙ
wobei R eine Alkoxy oder Hydroxygruppe ist, n = 1, 2, 3 ist und X einen Alkylrest, Epoxidrest, Vinylrest, (Meth)acrylrest, Hydroxyrest darstellt, mit der Maßgabe, dass die organische Funktion unmittelbar an das Si-Atom gebunden ist, oder durch einen Spacer von 1-12 Kohlenstoffatomen vom Si-Atom entfernt ist.

4. Zusammensetzung nach Anspruch 1 oder 3, **dadurch gekennzeichnet, dass** die ovalen bis kugelförmigen Feststoffe eine Partikelgröße von 10 nm - 100 µm aufweisen.

5. Zusammensetzung nach Anspruch 1 oder 3, **dadurch gekennzeichnet, dass** die lamellaren Feststoffe ein Längen zu Dicken Verhältnis (L/D) von 5 - 200 aufweisen.

6. Zusammensetzung nach einem oder mehreren der Ansprüche 1 bis 5, **dadurch gekennzeichnet, dass** das Verhältnis von ovalen bis kugelförmigen Partikeln zu lamellaren Partikeln 1 : 20 bis 20 : 1 beträgt.

7. Zusammensetzung nach einem oder mehreren der Ansprüche 1 bis 6, **dadurch gekennzeichnet, dass** das Verhältnis von lamellaren zu ovalen bis kugelförmigen Partikeln 1 : 10 beträgt.

8. Zusammensetzung nach einem oder mehreren der Ansprüche 1 bis 7, **dadurch gekennzeichnet, dass** der Anteil aller Feststoffe an der Gesamtformulierung mindestens 15% beträgt, bevorzugt 30% bis 50% und besonders bevorzugt 50% bis 85%.

9. Zusammensetzung nach einem oder mehreren der Ansprüche 1 bis 8, **dadurch gekennzeichnet, dass** die Zusammensetzung eine Viskosität von 100 - 500 000 mPas bei 25°C besitzt.

10. Verwendung einer Zusammensetzung nach einem oder mehreren der Ansprüche 1 bis 9, **dadurch gekennzeichnet, dass** der Gleitreibungskoeffizient gegenüber einer Zubereitung, die keine Partikel (D) enthält, um mindestens 10% reduziert wird.

11. Formkörper, hergestellt unter Verwendung einer Zusammensetzung nach einem oder mehreren der Ansprüche 1 bis 9.

12. Textiles oder nichttextiles Flächengebilde hergestellt unter Verwendung einer Zusammensetzung nach einem oder mehreren der Ansprüche 1 bis 9.
